# EUROPÄISCHE PATENTSCHRIFT

(11) **EP 1 638 064 B1**
(45) Veröffentlichungstag und Bekanntmachung des Hinweises auf die Patenterteilung: **17.08.2011**
(21) Anmeldenummer: 05018874.7
(22) Anmeldetag: 31.08.2005
(51) Int. Cl.: G09B 23/28

(54) **Simulator für das Training von minimal-invasiven medizinischen Operationen**
Training simulator for minimally invasive medical operations
Simulateur pour l'entrainement aux techniques opératoires minimalement invasive

(30) Priorität: 21.09.2004 DE 102004046038
(43) Veröffentlichungstag der Anmeldung: 22.03.2006
(73) Patentinhaber: Karl Storz GmbH & Co. KG, 78532 Tuttlingen (DE)
(72) Erfinder: Ehrhardt, André, 78532 Tuttlingen (DE); Irion, Dr.-Ing. Klaus M., 78576 Liptingen (DE); Speiser, Dipl.-Ing. (FH) Björn, 78628 Rottweil (DE)
(74) Vertreter: Lindner, Michael

(56) Entgegenhaltungen:
- EP-A- 0 970 714
- WO-A-99/38141
- WO-A-02/070980
- US-A- 5 800 178
- US-A1- 2001 016 804

## Beschreibung

Die vorliegende Erfindung betrifft einen virtuellen OP-Simulator für das Training von minimal-invasiven Operationen, insbesondere für endourologische Eingriffe, mit einer Simulationsrechnereinheit, mindestens einem Instrument, mindestens einer Instrumenteneingabeeinheit zur Aufnahme des Instruments, wobei die Instrumenteneingabeeinheit eine Bewegung des Instruments in einer vorgegebenen Anzahl von Freiheitsgraden ermöglicht und erfasst, und einer der Instrumenteneingabeeinheit zugeordneten Kraftrückkoppelungseinheit, die das Instrument direkt oder indirekt über die Instrumenteneingabeeinheit mit einstellbaren Kräften beaufschlagt.

Virtuelle OP-Simulatoren der vorgenannten Art sind allgemein bekannt. Die Anmelderin der vorliegenden Anmeldung bietet beispielsweise derartige Simulatoren an. Darüber hinaus sind beispielsweise aus US 5,800,178 oder US 5,629,594 virtuelle OP-Simulatoren für das Training von minimal-invasiven Operationen bekannt.

Allgemein erfordern derzeitige rechnergestützte Simulatoren für die virtuelle Durchführung von Operationen eine relativ hohe Rechenleistung, die einerseits zur Berechnung des virtuellen Operationssitus, der Weichgewebesimulation und der virtuellen Instrumente, und andererseits zur Ansteuerung der entsprechenden motorgestützten Eingabeeinheit zur Kraftrückwirkung bzw. Kraftrückkopplung sowie zur Erfassung der Instrumentenposition und anderer Eingabeparameter benötigt wird. Sowohl die Ansteuerung der Eingabeeinheit zur Kraftrückwirkung sowie die Erfassung der Instrumentenposition und anderer Eingabeparameter sollten in Echtzeit ablaufen, wobei die Frequenzen zur Kraftrückwirkung noch signifikant höher liegen sollten, da sonst der Anwender kein realitätsnahes Trainingsgefühl erhält. Echtzeit bedeutet in diesem Zusammenhang, dass die Übertragungsfrequenz der einzelnen Paramter zumindest jener Frequenz entspricht, mit der Bilder auf einem Display des rechnergestützten Simulators dargestellt werden (nachfolgend Videofrequenz genannt), sowie in WO 02/070980 oder WO 99/38141 nahegelegt.

Bisher sind hierfür meist mehrere Rechnersysteme eingesetzt worden, z.B. einerseits ein Hochleistungs-PC zur virtuellen Bilddarstellung und zur Simulation des Weichgewebes und andererseits digitale Signalprozessoren mit eigener Software zur Ansteuerung der entsprechenden Motorsysteme für die Kraftrückwirkung.

Dieser Rechenaufwand und der damit einhergehende Aufwand für die erforderlichen Rechner nimmt zu, wenn Instrumente und deren Kraftrückwirkung in einer Mehrzahl von Freiheitsgraden erfolgen soll, und nicht nur die Bewegung des Instruments sondern auch die distale Krafteinwirkung des endoskopischen Instruments auf das Gewebe und umgekehrt (actio = reactio) selbst nachgebildet werden soll. Der Aufwand nimmt weiter zu, wenn mehr als ein Zugang simuliert werden soll.

Vor diesem Hintergrund besteht die Aufgabe der Erfindung darin, einen virtuellen OP-Simulator der vorgenannten Art so weiterzubilden, dass die Anforderungen an die Simulationsrechnereinheit bezüglich Rechnerleistung herabgesetzt werden können, wobei das Instrument innerhalb von zumindest vier Freiheitsgraden bewegbar sein soll.

Diese Aufgabe wird von dem eingangs genannten virtuellen OP-Simulator dadurch gelöst, dass eine Kontrollsteuereinheit vorgesehen ist, die mit der Simulationsrechnereinheit und der Instrumenteneingabeeinheit verbunden ist, wobei die Kontrollsteuereinheit eine erste Schnittstelle aufweist, die eine Kommunikation von Parametern zwischen Kontrollsteuereinheit und Simulationsrechnereinheit mit einer Geschwindigkeit im Bereich der Videobildfrequenz bereitstellt, und eine zweite Schnittstelle aufweist, die eine Kommunikation von Parametern mit der Instrumenteneingabeeinheit mit einer Geschwindigkeit bereitstellt, die ein Vielfaches der Videobildfrequenz ist, und die Instrumenteneingabeeinheit insgesamt vier Freiheitsgrade erlaubt, Bewegungen des Instruments innerhalb dieser Freiheitsgrade erfasst, entsprechende Signale an die Kontrollsteuereinheit liefert und Signale für die Kraftrückkoppelungseinheit empfängt, die zumindest teilweise von der Simulationsrechnereinheit generiert werden.

Im Sinne der vorliegenden Erfindung ist unter dem Begriff "Parameter" ein (möglicherweise auch aus mehreren einzelnen Daten sich zusammensetzendes) Datum zur Beschreibung eines Werts, bspw. Position des Instruments zu verstehen.

D.h. mit anderen Worten, dass die zu einem Parameter gehörenden Datensätze mit einer Frequenz übertragen werden, die der Videobildfrequenz bzw. einem Vielfachen entsprechen.

Mit Hilfe der Kontrollsteuereinheit ist es möglich, die Simulationsrechnereinheit zu entlasten, da eine geringere Menge an Daten pro Zeiteinheit an die Kontrollsteuereinheit übertragen werden muss. Das bedeutet dann auch weniger Rechenaufwand für die Erzeugung dieser Daten. Bei diesen Daten handelt es sich im Wesentlichen um Kraftwerte, die zur Erzeugung der Kraftrückwirkung auf das Instrument erforderlich sind.

Die Datenübertragung von der Kontrollsteuereinheit zu der Instrumenteneingabeeinheit bzw. der Kraftrückkoppelungseinheit erfolgt jedoch mit einer sehr viel höheren Geschwindigkeit, so dass eine realitätsnahe Kraftrückwirkung dem Benutzer vermittelt werden kann.

Neben diesem Vorteil der geringeren Anforderungen an die Simulationsrechnereinheit besteht ein weiterer Vorteil des erfindungsgemäßen virtuellen OP-Simulators darin, dass das Instrument in zumindest vier Freiheitsgraden bewegt werden kann, wobei alle Bewegungen von der Instrumenteneingabeeinheit erfasst werden und für jede Bewegung eine Kraftrückwirkung erzeugt werden kann. Die vier Freiheitsgrade sind zwei Kippbewegungen (x- und y-Richtung; auch "pitch" und "yaw" genannt), eine translatorische Bewegung des Instruments in und aus der Instrumenteneingabeeinheit hinein bzw. heraus (z-Richtung; "trans" genannt) und eine Drehbewegung des Instruments um die eigene Längsachse (auch "roll" genannt).

Damit lässt der virtuelle OP-Simulator ein deutlich realitätsnäheres Training als die bekannten OP-Simulatoren zu.

In einer bevorzugten Weiterbildung ist die erste Schnittstelle eine serielle Schnittstelle, insbesondere eine USB-Schnittstelle.

Damit ist es möglich, die an einem PC standardmäßig vorhandene USB-Schnittstelle zur Kommunikation mit der Kontrollsteuereinheit zu verwenden. Darüber hinaus reicht die Übertragungsgeschwindigkeit einer seriellen Schnittstelle aus, um die erforderliche relativ geringe Übertragungsgeschwindigkeit zu erzielen.

Der Vorteil liegt folglich darin, dass die Anforderungen an die Simulationsrechnereinheit verringert werden können.

In einer bevorzugten Weiterbildung ist die zweite Schnittstelle eine parallele Schnittstelle.

Dies hat den Vorteil, dass gegenüber einer seriellen Schnittstelle eine deutlich höhere Übertragungsgeschwindigkeit möglich ist, wobei durch Verwendung einer solchen standardisierten Schnittstelle der Aufwand gering gehalten werden kann.

In einer bevorzugten Weiterbildung ist das Instrument proximalseitig einem Resektoskop mit Optik, Resektionsschlinge und Spülschaft nachempfunden, und weist ein Stellelement, insbesondere ein Mikrostellelement, auf, das der Kraftrückkoppelungseinheit zugeordnet ist und in die axiale Schlingenbewegung eine Kraft einkoppelt, die einen distalseitigen Gewebewiderstand gegenüber der Schlinge nachbildet.

D.h. mit anderen Worten, dass mit Hilfe des Stellelements dem Benutzer bei der Bedienung der Resektionsschlinge beim Berühren und Greifen von Gewebe ein realitätsnaher Widerstand vermittelt wird, der bei einer echten Operation durch den Widerstand des berührten bzw. des gegriffenen Gewebes ausgeübt werden würde.

Auch hier ist der Vorteil darin zu sehen, dass eine weitere Steigerung der "Realitätsnähe" des OP-Simulators möglich wird.

In einer bevorzugten Weiterbildung sind am Spülschaft des Instruments Ventilhähne vorgesehen, die mit Sensoren zur Erfassung der Ventilhahnbewegung versehen sind, wobei die von den Sensoren erzeugten Signale über die Kontrollsteuereinheit an die Simulationsrechnereinheit übertragen werden.

D.h. mit anderen Worten, dass der erfindungsgemäße virtuelle OP-Simulator auch die Simulation der Bedienung der Ventilhähne bzw. der diesen zugeordneten Funktionen ermöglicht. Die Betätigung eines Ventilhahns kann beispielsweise die Simulationsrechnereinheit dazu veranlassen, ein Spülen zu simulieren und entsprechend auf einem Monitor darzustellen. Gerade bei endourologischen Eingriffen kommt es sehr häufig zu spontanen Blutungen, welche die endoskopische Sicht extrem verschlechtern. Nur durch eine aktive Spülung kann die Sicht wieder hergestellt werden.

Auch hier liegt der Vorteil darin, dass der virtuelle OP-Simulator ein noch realitätsnäheres Training erlaubt.

In einer bevorzugten Weiterbildung sind die elektrischen Leitungen zur Übertragung von elektrischen Signalen zu bzw. von dem Instrument über den üblicherweise vorgesehenen Lichtanschluss geführt. Von dort aus werden sie entsprechend einem Lichtleiter in einem Schlauch bis zur Kontrollsteuereinheit geführt.

D.h. mit anderen Worten, dass die elektrischen Leitungen über den an einem Instrument vorgesehenen Lichtanschluss in das Innere geführt werden, so dass das Instrument keine zusätzlichen Öffnungen etc. benötigt.

Der Vorteil dieser Maßnahme liegt darin, dass der Benutzer den Eindruck eines echten Instruments mit Lichtleiter erhält, da die Kabelführung, das Gewicht, die Hebelverhältnisse etc. dem Originalinstrument entspricht. Die Zuführung der Leitungen an anderen Stellen würde dazu führen, dass die Handhabung des "Trainings"-Instruments sich gegenüber dem Original-Instrument verändern würde.

In einer bevorzugten Weiterbildung ist der Optik des Instruments ein endoskopisches Kameradummy zugeordnet, das nach dem Pendelprinzip ausgeführt ist.

D.h. mit anderen Worten, dass an der Optik des Instruments eine Vorrichtung vorgesehen ist, die einer endoskopischen Kamera nachempfunden ist, ohne jedoch optische Elemente aufzuweisen. "Pendelprinzip" heißt in diesem Zusammenhang, dass der Kamerakörper aufgrund der Schwerkraft stets nach unten zeigt, auch wenn das Instrument in seiner Achse ("roll") gedreht wird. Dies führt dazu, dass der endoskopische Horizont gleich bleibt. Die Anmelderin bietet bspw. derartige Orginal-Pendelkameras unter der Produktnummer 22210032-3 oder 22210132-3 an.

Der Vorteil dieser Maßnahme liegt darin, dass eine weitere Steigerung der Realitätsnähe des OP-Simulators erreicht wird.

In einer bevorzugten Weiterbildung erzeugt das Kameradummy Steuersignale, die der Kontrollsteuereinheit zugeführt werden und bestimmte Funktionen einer Kamera, insbesondere Fokus, Zoom, betreffen.

Diese Maßnahme hat den Vorteil, dass zusätzlich Funktionen über die Simulationsrechnereinheit simuliert werden können, die bei einer normalen Operation von der endoskopischen Kamera bereitgestellt werden (es handelt sich hierbei insbesondere um ein Fokussieren des Bildes und ein Vergrößern oder Verkleinern des Bildes).

Auch mit dieser Maßnahme lässt sich vorteilhafterweise die Realitätsnähe des erfindungsgemäßen OP-Simulators weiter steigern.

In einer bevorzugten Weiterbildung arbeitet die erste Schnittstelle mit einer Übertragungsrate der einzelnen Parameter von 16 bis 60 Hz.

D.h. mit anderen Worten, dass die Schnittstelle pro Parameter 16 bis 60 Datensätze bzw. Werte pro Sekunde empfangen bzw. senden kann. Bevorzugt ist jedoch ein Wert von 50 Hz, d.h. 50 Datensätze bzw. Werte pro Sekunde und Parameter, was der üblichen Videobildfrequenz entspricht. Sollen bspw. zwei Parameter übertragen werden, hat die Schnittstelle insgesamt 100 Datensätze pro Sekunde (jeweils 50 pro Parameter) zu übertragen

Als Parameter werden bspw. vier diskrete Signale zur Einstellung der Kraftrückkoppelung für die vier Freiheitsgrade, ein Datensatz für die Drehrichtungsangabe der Kraftrückkoppelung und ein Datensatz über den Zustand des Gesamtsystems von der Simulationsrechnereinheit zur Kontrollsteuereinheit übertragen.

Von der Kontrollsteuereinheit zur Simulationsrechnereinheit werden als Parameter bspw. folgende Daten übertragen: vier Datensätze mit den Positionsdaten (für die vier Freiheitsgrade), acht Datensätze aus Instrument und Kamera und ein Datensatz mit Zustandsgrößen, wie bspw. Zustand von drei Schaltern in dem Kameradummy, Zustand zweier Fußschalter, Zustand eines Trokarmoduls der Instrumenteneingabeeinheit (Instrument im Trokar).

Die vorgenannten Angaben über die zu übertragenden Parameter sind rein beispielhaft und können natürlich verändert und an besondere Bedingungen angepasst werden.

Der Vorteil der erfindungsgemäßen geringen Übertragungsrate liegt darin, dass die Simulationsrechnereinheit für die Datenübertragung relativ geringe Rechenleistung bereitstellen muss, so dass gegenüber bisherigen Systemen mehr Rechenleistung für die eigentliche Simulation, d.h. die Darstellung auf einem Monitor und die Berechnung von Kraftrückwirkungswerten, zur Verfügung steht. Insgesamt können auf diese Art und Weise übliche Standardcomputer (PCs) verwendet werden, die üblicherweise mit dem Betriebssystem "Windows" arbeiten, welches eigentlich nicht für Echtzeitanwendungen geeignet ist.

In einer bevorzugten Weiterbildung arbeitet die zweite Schnittstelle der Kontrollsteuereinheit mit einer Übertragungsrate von etwa 1000 Hz.

D.h. mit anderen Worten, dass die Schnittstelle 1000 Werte pro Sekunde an die Instrumenteneingabeeinheit bzw. die Kraftrückkoppelungseinheit übertragen kann. Der Vorteil liegt darin, dass dem Benutzer ein realitätsnäherer taktiler Eindruck vermittelt werden kann.

Erfindungsgemäss ist die Kontrollsteuereinheit dazu ausgelegt, von der Simulationsrechnereinheit eine Anzahl von Kraftwerten pro Sekunde für die Kraftrückkoppelungseinheit zu empfangen und ein Vielfaches dieser Anzahl von Kraftwerten durch Interpolation zu berechnen und an die Instrumenteneingabeeinheit für die Kraftrückkoppelungseinheit zu senden.

D.h. mit anderen Worten, dass die Kontrollsteuereinheit aus den von der Simulationsrechnereinheit gelieferten Werten eine Vielzahl von Zwischenwerten berechnet und an die Instrumenteneingabeeinheit übermittelt. Durch diese interpolierten Zwischenwerte lässt sich das taktile Empfinden bei der Bedienung des Instruments weiter verbessern.

In einer bevorzugten Weiterbildung weist die Kraftrückkoppelungseinheit mehrere Stellelemente auf, die der Instrumenteneingabeeinheit zugeordnet sind und mit dem Instrument zusammenwirken.

D.h. mit anderen Worten, dass mehrere Stellelemente vorgesehen sind, um für jeden möglichen Freiheitsgrad der Bewegung des Instruments eine entgegengerichtete Kraft erzeugen zu können. Die entsprechenden Stellelemente sind entweder in der Instrumenteneingabeeinheit, die das Instrument aufnimmt, vorgesehen, oder im Instrument selbst.

Dadurch, dass für jeden Freiheitsgrad eine Kraftrückwirkung vorhanden ist, lässt sich der OP-Simulator sehr realitätsnah bedienen bzw. lässt ein sehr realitätsnahes Training zu.

In einer bevorzugten Weiterbildung sendet die Simulationsrechnereinheit etwa 30 Sollkraftwerte pro Sekunde an die Kontrollsteuereinheit, und die Kontrollsteuereinheit berechnet aus diesen etwa 30 Werten ein Vielfaches (500-1000) Werte und sendet diese an die Instrumenteneingabeeinheit.

Diese Wahl der Einstellung hat sich in der Praxis als besonders vorteilhaft herausgestellt, um einerseits die Rechenbelastung der Simulationsrechnereinheit gering zu halten und andererseits die Bedienung des Instruments so realitätsnah wie möglich zu gestalten.

In einer bevorzugten Weiterbildung ist ein einziges Instrument vorgesehen, und die Instrumenteneingabeeinheit weist eine einzige Aufnahme für ein Instrument auf.

Auch diese Maßnahme hat sich in der Praxis als besonders vorteilhaft herausgestellt. Es ist jedoch zu erwähnen, dass der erfindungsgemäße OP-Simulator auch für die Verwendung mehrerer Instrumente mit einer Instrumenteneingabeeinheit, die mehrere Aufnahmen aufweist, oder mit mehreren Instrumenteneingabeeinheiten einsetzbar ist.

Weitere Vorteile und Ausgestaltungen der Erfindung ergeben sich aus den übrigen Unteransprüchen oder der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels unter Bezugnahme auf die begleitende Zeichnung näher beschrieben. Dabei zeigen:
- Fig. 1: ein schematisches Blockschaltdiagramm eines erfindungsgemäßen virtuellen OP-Simulators;
- Fig. 2: eine schematische Darstellung eines Instruments; und
- Fig. 3: eine schematische Darstellung einer Kamera.

Die vorliegende Erfindung wird nachfolgend anhand eines virtuellen OP-Simulators für das Training von minimal-invasiven Operationen für endourologische Eingriffe erläutert. Es versteht sich jedoch, dass der erfindungsgemäße OP-Simulator nicht nur für endourologische Eingriffe sondern auch für die Simulation von anderen endoskopischen Eingriffen an menschlichen oder tierischen Körpern verwendbar ist. Darüber hinaus wird nachfolgend als Instrument ein Resektoskop beschrieben, wobei dies rein beispielhaft verwendet wird. Es versteht sich, dass auch andere Instrumente einsetzbar sind.

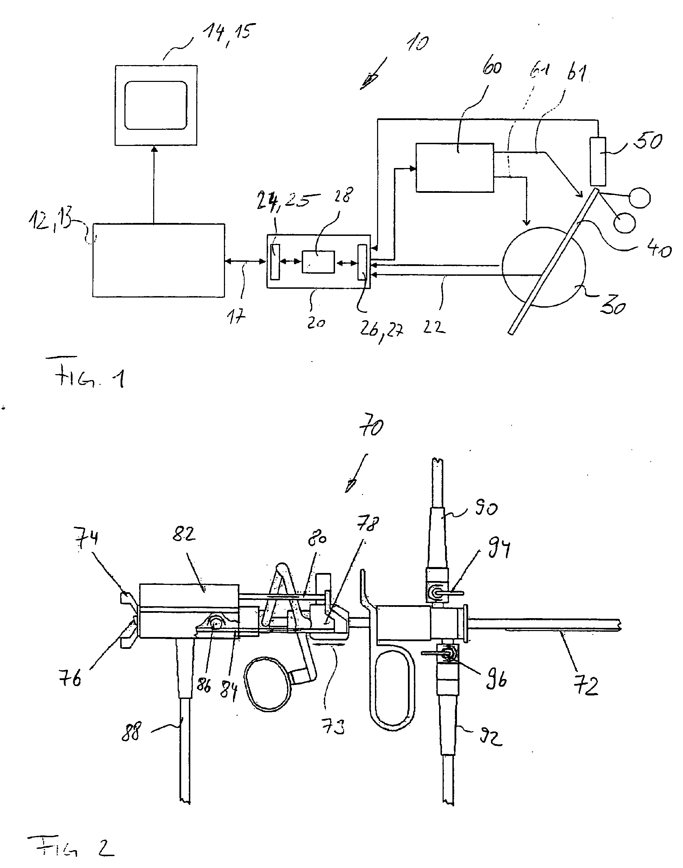

In Fig. 1 ist ein virtueller OP-Simulator für das Training von minimal-invasiven Operationen für endourologische Eingriffe in Form eines Blockschaltdiagramms dargestellt und mit dem Bezugszeichen 10 gekennzeichnet. Der OP-Simulator 10 umfasst eine Simulationsrechnereinheit 12, die mit einem oder mehreren Monitoren 14 verbunden ist. Bei der Simulationsrechnereinheit 12 handelt es sich üblicherweise um einen Standard-PC 13 und bei den Monitoren 14 um TFT-Flachbildschirme 15.

Die Simulationsrechnereinheit 12 umfasst die für den Betrieb des OP-Simulators 10 erforderliche Software, die üblicherweise unter dem Betriebssystem "Windows" läuft. Die Software selbst besteht aus mehreren Modulen, die unterschiedliche Funktionen erfüllen. So ist beispielsweise ein Modul dafür zuständig, die Simulationsbilder zu berechnen und entsprechende Signale an den bzw. die Monitore 14 zu liefern. Ein anderes Modul ist dafür zuständig, Kraftrückkoppelungswerte zu berechnen. Schließlich aber nicht abschließend ist ein Modul vorhanden, das Daten von realitätsnahen Modellen bestimmter Organe enthält. Daneben enthält dieses Modul beispielsweise die Morphologie, die Position, die Größe sowie die Anzahl von Tumoren, die nach dem Zufallsprinzip auswählbar sind. Das Modul dient somit dazu, einen "virtuellen Patienten" zu simulieren. Es versteht sich, dass die Software weitere Module, beispielsweise für die Datenerfassung bzw. Datenübertragung, aufweist. Es soll hier jedoch nicht näher darauf eingegangen werden.

Die Simulationsrechnereinheit 12 ist über eine serielle Datenleitung 17 mit einer Kontrollsteuereinheit 20 verbunden, deren Funktion später im Detail beschrieben wird.

Der OP-Simulator 10 umfasst ferner eine Instrumenteneingabeeinheit 30, die zur Aufnahme eines Instruments 40 dient. Die Instrumenteneingabeeinheit 30, die auch als aktives Trokarmodul (ATM) bezeichnet wird, ist über Datenleitungen 22 ebenfalls mit der Kontrollsteuereinheit 20 verbunden. Die Instrumenteneingabeeinheit 30 selbst dient dazu, das Instrument 40 aufzunehmen und eine Bewegung des selben in eine Vielzahl von Richtungen (Freiheitsgrade) zu ermöglichen. In Fig. 1 sind zur Verdeutlichung Richtungspfeile x, y, z und r für die im vorliegenden Fall vier Freiheitsgrade angegeben. Das Instrument 40 lässt sich innerhalb der Instrumenteneingabeeinheit also in x- und y-Richtung Kippen, in z-Richtung verschieben (in das Trokarmodul hinein bzw. aus diesem heraus) und um die eigene Achse drehen (r-Richtung). Allgemein ist der Aufbau einer solchen Instrumenteneingabeeinheit 30 beispielsweise in DE 10 055 294 C2 oder 10 055 292 A1 ausführlich beschrieben. Zur Vereinfachung wird deshalb auf die vorgenannten Druckschriften verwiesen und deren Offenbarungsgehalt durch Bezugnahme hiermit in die vorliegende Anmeldung mit aufgenommen.

Kurz gesagt umfasst die Instrumenteneingabeeinheit eine Mechanikeinheit, die die Bewegung des Instruments in vier Freiheitsgraden ermöglicht, mehrere Stellelemente in Form von Motoren für die Kraftrückkoppelung und Sensoren zur Erfassung der Bewegung des Instruments bzw. dessen genaue Position. Üblicherweise werden mehrere inkrementale Drehwinkelgeber als Sensoren verwendet. Vorzugsweise werden vier Drehwinkelgeber für Rotation in x-Richtung (pitch), Rotation in y-Richtung (yaw), Rotation in r-Richtung (roll) und Translation in z-Richtung (trans) eingesetzt. Im vorliegenden Ausführungsbeispiel kommen "roll" und "trans" nicht direkt aus der Instrumenteneingabeeinheit, sondern werden als Funktion zweier Drehwinkelgeber (DWG2 und DWG3) berechnet, als DWG3+DWG4 = roll, und DWG3-DWG4 = trans.

Die entsprechenden von den Sensoren erfassten Signale werden dann als Pulsreihenfolge an die Kontrollsteuereinheit übertragen.

Der in Fig. 1 gezeigte OP-Simulator weist ferner eine Kamera 50 auf, die dem Instrument 40 zugeordnet ist und als Kameradummy ohne echte optische Funktion dient. An dieser Stelle sei jedoch angemerkt, dass die Verwendung einer solchen Kamera 50 in dem OP-Simulator 10 optional erfolgen kann und kein notwendiger Bestandteil des Simulators ist. Das Kameradummy 50 ist einer Pendelkamera (Kamera nach dem Pendelprinzip) nachgebildet, wie sie von der Anmelderin bspw. unter den Produktnummern 22210032-3 oder 22210132-3 angeboten wird. Zur genauen Erläuterung der Funktionsweise einer solchen Pendelkamera wird der Einfachheit wegen auf die entsprechenden druckschriftlichen Unterlagen zu diesen Kameras verwiesen.

Schließlich umfasst der OP-Simulator 10 eine Kraftrückkoppelungseinheit 60, die eine Vielzahl von motorgestützten Stellelementen aufweist, die in Fig. 1 nicht gezeigt sind. Diese Stellelemente sind entweder in der Instrumenteneingabeeinheit 30 oder im Instrument 40 selbst vorgesehen. Die eingezeichneten Pfeile 61 sollen dies andeuten; bei den Pfeilen 61 handelt es sich im Gegensatz zu den anderen Pfeilen nicht um Datenleitungen, sondern vielmehr um Zuordnungspfeile.

Besonders vorteilhaft ist es, für jeden möglichen Freiheitsgrad des Instruments 40 ein solches Stellelement vorzusehen, um der Bewegung des Benutzers unabhängig von der Richtung eine Kraft entgegenzustellen, um auf diese Weise eine realitätsnähere Simulation zu ermöglichen. Der grundsätzliche Aufbau einer solchen auch als *Force Feedback* bezeichneten Vorrichtung ist allgemein bekannt und soll an dieser Stelle nicht weiter ausgeführt werden.

Die Kraftrückkoppelungseinheit 60 respektive die einzelnen Stellelemente empfangen Stellsignale von der Kontrollsteuereinheit 20.

Die Kontrollsteuereinheit 20 wiederum empfängt Bewegungssignale von der Instrumenteneingabeeinheit 30 in Form einer Pulsreihenfolge, die von den Sensoren der Instrumenteneingabeeinheit erzeugt wurden. Die Kontrollsteuereinheit berechnet auf der Grundlage dieser Pulsreihenfolge die Position, Orientierung und Geschwindigkeit der Spitze des Instruments 40 und führt anschließend eine Koordinatentransformation für pitch, yaw und trans (z) durch. Diese Positionsdaten (Kugelkoordinaten und roll) benötigt die Simulationsrechnereinheit 12, um entsprechende Bilder für die Darstellung auf dem Monitor 14 zu berechnen.

Für den Datenaustausch ist die Kontrollsteuereinheit 20 mit einer ersten Schnittstelle 24 und einer zweiten Schnittstelle 26 versehen. Die erste Schnittstelle 24 übernimmt die Kommunikation mit der Simulationsrechnereinheit 12, während die zweite Schnittstelle 26 für die Kommunikation mit der Instrumenteneingabeeinheit 30 und der Kraftrückkoppelungseinheit 60 zuständig ist.

Aufgrund der hohen erforderlichen Rechenleistung für die eigentliche Simulation, d.h. die Berechnung und Darstellung der Bilder auf dem Monitor, wird die Datenübertragung zwischen Simulationsrechnereinheit 12 und Kontrollsteuereinheit 20 möglichst gering gehalten. In dem vorliegenden Ausführungsbeispiel wird eine Datenübertragungsrate gewählt, die der Videobildfrequenz entspricht. D.h. mit anderen Worten, dass bei einer angenommenen Videobildfrequenz von 50 Hz etwa 50 Werte pro Sekunde und zu übertragenden Parameter an die Kontrollsteuereinheit 20 übertragen werden. Bei diesen Werten handelt es sich im Wesentlichen um den Parameter "Kraftwerte", die für die Stellelemente der Kraftrückkoppelungseinheit 60 bestimmt sind.

Darüber hinaus werden unter anderem ca. 50 Positionsdaten (Parameter "Position") pro Sekunde von der Kontrollsteuereinheit 20 an die Simulationsrechnereinheit 12 übertragen, so dass eine realitätsnahe Darstellung der Bilder ermöglicht wird.

Es hat sich gezeigt, dass die USB-Schnittstelle eines herkömmlichen PCs 13 als Simulationsrechnereinheit 12 geeignet ist, die vorgenannten Vorgaben bezüglich der Übertragungsrate zu erfüllen. Somit handelt es sich auch bei der ersten Schnittstelle 24 um eine USB-Schnittstelle 25.

Da die Übermittlung von 30 bis 50 Kraftwerten für die Stellelemente, insbesondere bei vier oder mehr Freiheitsgraden, für ein realitätsnahes Training zu wenig ist, liefert die zweite Schnittstelle 26 die Daten mit einer sehr viel höheren Geschwindigkeit. Als besonders vorteilhaft haben sich beispielsweise 1000 Werte pro Sekunde herausgestellt, wobei selbstverständlich auch andere Werte denkbar sind. Die Übertragung der Werte erfolgt hierbei parallel, so dass solch höhere Übertragungsraten ohne weiteres möglich sind. Bei der zweiten Schnittstelle 26 handelt es sich somit um eine parallele Schnittstelle 27.

Zur Steuerung der Schnittstellen 24, 26 umfasst die Kontrollsteuereinheit 20 ein Steuerelement 28, das beispielsweise als Mikroprozessor ausgebildet sein kann. Wie zuvor erwähnt, ist die Anzahl der zu der Schnittstelle 24 gesendeten Daten deutlich geringer als die von der Schnittstelle 26 gesendeten Daten. Das Steuerelement 28 ist deshalb dafür vorgesehen, für die von der Schnittstelle 24 gelieferten Daten eine Vielzahl von Zwischenwerten durch lineare Extrapolation als Funktion der aktuellen Krafttendenz (Gradient) zu berechnen und der zweiten Schnittstelle 26 zur Übertragung zuzuführen. Diese Berechnung erfolgt auf einem FPGA, der Teil des Steuerelements 28 ist.

Eine weitere Aufgabe des Steuerelements 28 besteht darin, die der zweiten Schnittstelle 26 übermittelten Positionsdaten der ersten Schnittstelle 24 zur weiteren Übertragung an die Simulationsrechnereinheit 12 zu übermitteln, wobei die Daten jedoch nicht bearbeitet oder verändert werden. Selbstverständlich ist denkbar, diese Daten bei Bedarf auch zu bearbeiten.

An dieser Stelle sei nochmals darauf hingewiesen, dass die Anzahl der übertragenen Daten von der Simulationsrechnereinheit 12 zu der Kontrollsteuereinheit 20 sehr viel geringer ist als die Anzahl der Daten, die zur Steuerung der Stellelemente der Kraftrückkoppelungseinheit 60 erforderlich sind. Damit ist es erfindungsgemäß möglich, die Simulationsrechnereinheit 12 zu entlasten, da der Aufwand zur Berechnung der Kraftrückkoppelungswerte reduziert wird. Die damit frei werdende Rechenleistung kann somit für die Simulation, d.h. die Bilderzeugung und -darstellung, verwendet werden.

Um die Simulation insbesondere für Operationen, wie z.B. Resektion in der Harnblase, so realistisch wie möglich zu gestalten, ist das Instrument 40 als proximaler Teil eines Resektoskops nachgebildet. Eine entsprechende Darstellung eines solchen Resektoskops ist in Fig. 2 enthalten. Es versteht sich jedoch, dass der OP-Simulator 10 auch mit anderen Instrumenten verwendet werden kann. Die Darstellung und nachfolgende Beschreibung eines Resektoskops ist beispielhaft und nicht beschränkend gewählt. Auch andere Instrumente können mit dem OP-Simulator 10 verwendet werden.

Der proximale Teil eines Resektoskops ist in Fig. 2 schematisch dargestellt und mit dem Bezugszeichen 70 gekennzeichnet. Das Resektoskop 70 weist eine Zahnstange 72 auf, die in einen Trokar der Instrumenteneingabeeinheit 30 eingeführt werden kann. Dabei greift ein Zahnrad der Instrumenteneingabeeinheit 30 in die Zahnstange 72 ein und ermöglicht somit, die translatorische Bewegung innerhalb des Trokars zu erfassen.

Am proximalen Ende des Resektoskops 70 ist ein Okular 74 vorgesehen, an das ein Kameragehäuse anbringbar ist, was nachfolgend noch beschrieben werden wird. Innerhalb des Okulars 74 ist eine Abtastschräge 76 vorgesehen, die eine Erfassung der Position, d.h. der relativen Lage der Kamera zu dem Resektoskop, zulässt.

Das Resektoskop 70 umfasst ferner einen Schlitten 78, der durch entsprechende Manipulation durch den Benutzer in Richtung des Pfeils 79 bewegt werden kann. Eine solche Bewegung würde bei einem normalen Resektoskop beispielsweise zu einer Betätigung der Resektionsschlinge führen.

Die Bewegung des Schlittens 78 wird auf eine Achse 80 übertragen, die Bestandteil eines Linear-Potentiometers 82 ist. Die Bewegung der Achse 80 relativ zu dem Linear-Potentiometer 82 führt zu einer Veränderung eines Widerstands, was zur Erfassung der Position des Schlittens 78 verwendet werden kann.

Der Schlitten 78 ist ferner mit einer Zahnstange 84 verbunden, die die Bewegung des Schlittens auf ein Zahnrad 86 überträgt.

Dieses Zahnrad 86 ist mit einem Stellelement, d.h. einem Motor, verbunden, der zu der Kraftrückkoppelungseinheit 60 gehört. Mit Hilfe dieses Stellelements kann über das Zahnrad 86 die Zahnstange 84 mit einer Kraft beaufschlagt werden, die der Bewegung des Schlittens 78 entgegengerichtet ist. Diese Kraft ist für den Benutzer spürbar und dient beispielsweise dazu, einen Gewebewiderstand, der einer Resektionsschlinge entgegengebracht wird, zu simulieren.

Die für die Versorgung von Stellelement und Linear-Potentiometer erforderlichen elektrischen Leitungen werden - in Fig. 2 nicht gezeigt - über einen Lichtanschluss 88 geführt, der bei jedem Resektoskop vorhanden ist und normalerweise Lichtwellenleiter aufnimmt.

Das in Fig. 2 gezeigte Resektoskop umfasst ferner eine Zulaufleitung 90 und eine Ablaufleitung 92, die zum Zuführen bzw. Abführen von Spülflüssigkeit dienen. In diesen beiden Leitungen 90, 92 sind jeweils Ventilhähne 94 bzw. 96 vorgesehen, die bei einem normalen Resektoskop die Leitungen öffnen bzw. schließen können. Bei dem vorliegenden Resektoskop 70 für den OP-Simulator 10 sind den beiden Ventilhähnen 94, 96 Mikropotentiometer zugeordnet, mit deren Hilfe eine Bewegung der Ventilhähne 94, 96 erfasst werden kann. Die entsprechenden elektrischen Signale, die von diesen Mikropotentiometern erzeugt werden, werden über die Kontrollsteuereinheit 20 der Simulationsrechnereinheit 12 zur weiteren Auswertung zugeführt.

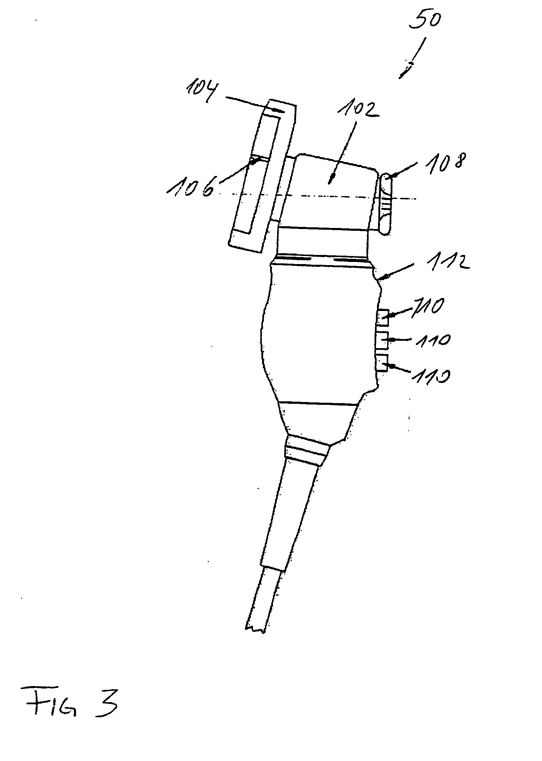

Wie bereits erwähnt, kann an das Okular 74 ein so genanntes Kameradummy angeschlossen werden. Ein solches ist schematisch in Fig. 3 dargestellt und mit dem Bezugszeichen 50 gekennzeichnet. Das Kameradummy 50 umfasst einen Kamerakopf 102, an dem eine Okularaufnahme 104 drehbar angebracht ist. Über diese Okularaufnahme 104 lässt sich das Kameradummy 100 an das Okular 74 des Resektoskops 70 anschließen. Innerhalb der Okularaufnahme ist ein Abtaststift 106 vorgesehen, der mit der Abtastschräge 76 zusammenwirkt. Mit Hilfe dieses Abtaststiftes ist es möglich, die relative Lage der Kamera zum Resektoskop zu detektieren.

Das Kameradummy 50 umfasst ferner einen Fokusdrehknopf 108 sowie insgesamt drei Drucktasten 110. Während der Fokusdrehknopf 108 im Bereich des Kamerakopfes 102 vorgesehen ist, sind die drei Drucktasten 110 im Bereich des Kameragehäuses 112 vorgesehen, wobei das Kameragehäuse 112 drehbar ist.

Über den Fokusdrehknopf 108 sowie die Drucktasten 110 können Signale erzeugt werden, die über die Kontrollsteuereinheit 20 zur Simulationsrechnereinheit 12 übertragen werden. Diese Signale können zur Veränderung des Bilds, beispielsweise Fokussieren oder Vergrößern/Verkleinern (Zoomen), verwendet werden. Insgesamt dient das Kameradummy 50 dazu, die bei einer Kamera vorhandenen Funktionen realitätsnah nachzubilden.

Bei dem gezeigten Kameradummy handelt sich -wie bereits erwähnt- um eine Pendelkamera. Dieser Kameratyp ist so ausgebildet, dass das Kameragehäuse aufgrund der Schwerkraft stets nach unten zeigt, auch wenn das Instrument 40 in seiner Achse (r-Richtung) gedreht wird. Dies führt dazu, dass der endoskopische Horizont gleich bleibt. Zur Erfassung der relativen Position Kamera-Okular ist der Abtaststift 106 und die Abtastschräge 76 vorgesehen. Bei einer Drehung wird ein entsprechendes Positionsdatum erzeugt und über die Kontrollsteuereinheit an den Simulationsrechner übermittelt. Dort wertet das entsprechende Softwaremodul das Datum aus und verändert in Antwort darauf gegebenenfalls die Darstellung auf dem Monitor.

Im Betrieb des in Figur 2 gezeigten Resektoskops wird eine Vielzahl von Parameter erfasst und zwischen den einzelnen Einheiten 12, 20 und 30 übertragen. Zu diesen Parametern gehören bspw.: Vier diskrete Signale zur Einstellung der Kraftrückkoppelung der einzelnen Stellelemente für die vier Freiheitsgrade, ein Datensatz für die Drehrichtungsangabe der Stellelemente der Kraftrückkoppelung und ein Datensatz über den Zustand des Gesamtsystems. Diese Parameter werden von der Simulationsrechnereinheit 12 zur Kontrollsteuereinheit 20 übertragen.

Von der Kontrollsteuereinheit 20 zur Simulationsrechnereinheit 12 werden als Parameter bspw. folgende Daten übertragen: vier Datensätze mit den Positionsdaten (für die vier Freiheitsgrade), acht Datensätze aus den Potentiometern bzw. Erfassungselementen von Instrument, Kamera und Ventilhähnen, und ein Datensatz mit Zustandsgrößen, wie bspw. Zustand der drei Schalter 110 in dem Kameradummy, Zustand zweier Fußschalter (nicht in den Figuren gezeigt), Zustand eines Trokarmoduls der Instrumenteneingabeeinheit (d.h. Information darüber, ob ein Instrument im Trokarmodul eingeführt ist).

Weitere Parameter sind selbstverständlich denkbar. Ein solcher weiterer Parameter könnte beispielsweise eine Angabe darüber sein, welche Art von Instrument im Trokarmodul eingeführt ist. Hierfür ist es allerdings erforderlich, das die Instrumenteneingabeeinheit 30 mit einer Instrumentenerkennung ausgestattet ist. Der in Figur 1 gezeigte OP-Simulator 10 kann jederzeit um eine solche Instrumentenerkennung ergänz werden. Aus Vereinfachungsgründen ist diese Möglichkeit jedoch nicht bildlich dargestellt.

Die Übertragung der einzelnen Parameter über die erste Schnittstelle (USB-Schnittstelle) 24 kann in unterschiedliche Weise erfolgen. In der Praxis hat sich jedoch folgender Ablauf als besonders vorteilhaft herausgestellt:

Die Simulationsrechnereinheit 12 liest und schreibt etwa 20 Mal pro Sekunde auf die zu der USB-Schnittstelle gehörenden Register. Die Register werden einzeln nacheinander gelesen und beschrieben, wobei folgende Register in der angegebenen Reihenfolge gelesen werden:
- Vier 16 Bit Datensätze betreffend Positionsdaten, nämlich 0: pitch, 1: yaw; 2-3: roll; 2+3: trans
- Acht 16 Bit Datensätze betreffend analoge Eingänge (Analog Inputs), nämlich 0,1: Kamerawinkel; 2: Zoom; 3: Fokus; 7: Loop-Depth; 8: WatherFlush;
- ein 8 Bit Datensatz betreffend digitale Eingänge (Digital input bits), nämlich 1: is TrokarPlugged; 2: isBlueButton; 3: is White Button; 4: isCuttingHigh; 5: isCuttingLow.

Als nächstes beschreibt die Simulationsrechnereinheit folgende Register in der angegebenen Reihenfolge:
- vier 8 Bit Datensätze betreffend Kraftrückkoppelungswerte für die Stellelemente (PWM);
- ein 4 Bit Datensatz betreffend die Richtung der Kraftrückkoppelung der einzelnen Stellelemente;
- ein 4 Bit Datensatz betreffend "Power Enable".

In dem in Fig. 1 gezeigten Ausführungsbeispiel ist eine einzige Instrumenteneingabeeinheit 30 vorgesehen. Alternativ ist es jedoch auch denkbar, zumindest eine weitere Instrumenteneingabeeinheit vorzusehen, die einen identischen Aufbau besitzen kann. Auf diese Weise könnte ein Mehrportsystem realisiert werden, das die Simulation einer Operation mit bspw. zwei Instrumenten ermöglicht.

Weiter bevorzugt ist es in diesem Zusammenhang, die beiden Instrumenteneingabeeinheiten zueinander verlagerbar zu halten, so dass der Abstand der beiden veränderbar wäre. Entsprechend sind Sensoren vorgesehen, die diesen Abstand erfassen und an die Kontrollsteuereinheit und die Simulationsrechnereinheit zu übermitteln, so dass die Simulation entsprechend darauf reagieren kann.

Bei einem Einsatz von zwei Instrumenteneingabeeinheiten ist es auch möglich, eine Instrumentenkollision real zu erfahren, dann wenn die beiden Instrumente miteinander kollidieren. Reagiert der Benutzer nicht auf diese Kollision kann es bei entsprechender Krafteinwirkung auch zu Verformungen der Instrumente kommen.

## Patentansprüche

1. Virtueller OP-Simulator (10) für das Training von minimal-invasiven Operationen, insbesondere für endourologische Eingriffe, mit
einer Simulationsrechnereinheit (12),
mindestens einem Instrument (40),
mindestens einer Instrumenteneingabeeinheit (30) zur Aufnahme des Instruments (40), wobei die Instrumenteneingabeeinheit (30) eine Bewegung des Instruments (40) in einer vorgegebenen Anzahl von Freiheitsgraden ermöglicht und erfasst, und
einer der Instrumenteneingabeeinheit (30) zugeordneten Kraftrückkoppelungseinheit (60), die das Instrument (40) direkt oder indirekt über die Instrumenteneingabeeinheit (30) mit einstellbaren Kräften beaufschlagt,
**dadurch gekennzeichnet, dass**
eine Kontrollsteuereinheit (20) vorgesehen ist, die mit der Simulationsrechnereinheit (12) und der Instrumenteneingabeeinheit (30) verbunden ist, wobei die Kontrollsteuereinheit (20) eine erste Schnittstelle (24) aufweist, die eine Kommunikation von Parametern zwischen Kontrollsteuereinheit (20) und Simulationsrechnereinheit (12) mit einer Übertragungsgeschwindigkeit im Bereich der Videobildfrequenz bereitstellt, und eine zweite Schnittstelle (26) aufweist, die eine Kommunikation von Parametern mit der Instrumenteneingabeeinheit (30) mit einer Übertragungsgeschwindigkeit bereitstellt, die größer als die Videobildfrequenz ist,
die Instrumenteneingabeeinheit (30) zumindest vier Freiheitsgrade erlaubt, Bewegungen des Instruments (40) innerhalb dieser Freiheitsgrade erfasst, entsprechende Signale an die Kontrollsteuereinheit (20) liefert und Signale für die Kraftrückkoppelungseinheit (60) empfängt, die zumindest teilweise von der Simulationsrechnereinheit (12) generiert werden, und
die Kontrollsteuereinheit (20) dazu ausgelegt ist, von der Simulationsrechnereinheit (12) eine Anzahl von Kraftwerten pro Sekunde für die Kraftrückkoppelungseinheit (60) zu empfangen und ein Vielfaches dieser Anzahl von Kraftwerten durch Interpolation zu berechnen und an die Instrumenteneingabeeinheit (30) für die Kraftrückkoppelungseinheit (60) zu senden.

2. Virtueller OP-Simulator nach Anspruch 1, **dadurch gekennzeichnet, dass** die erste Schnittstelle (24) eine serielle Schnittstelle, insbesondere eine USB-Schnittstelle (25) ist.

3. Virtueller OP-Simulator nach Anspruch 1 oder 2, **dadurch gekennzeichnet, dass** die zweite Schnittstelle (26) eine parallele Schnittstelle (27) ist.

4. Virtueller OP-Simulator nach einem der vorhergehenden Ansprüche, **dadurch gekennzeichnet, dass** das Instrument (40) proximalseitig einem Resektoskop (70) mit Optik, Resektionsschlinge und Spülschaft nachempfunden ist, und ein Stellelement (86), insbesondere ein Mikrostellelement aufweist, das der Kraftrückkoppelungseinheit (60) zugeordnet ist und in die axiale Schlingenbewegung eine Kraft einkoppelt, die einen distalseitigen Gewebewiderstand gegenüber der Schlinge nachbildet.

5. Virtueller OP-Simulator nach Anspruch 4, **dadurch gekennzeichnet, dass** am Spülschaft Ventilhähne (94, 96) vorgesehen sind, die mit Sensoren zur Erfassung der Ventilhahnbewegung versehen sind, wobei die von den Sensoren erzeugten Signale über die Kontrollsteuereinheit (20) an die Simulationsrechnereinheit (12) übertragen werden.

6. Virtueller OP-Simulator nach einer der Ansprüche 1 bis 5, **dadurch gekennzeichnet, dass** elektrische Leitungen zur Übertragung von elektrischen Signalen zu bzw. von dem Instrument (40) über den üblicherweise vorgesehenen Lichtanschluss (88) geführt sind.

7. Virtueller OP-Simulator nach einem der Ansprüche 4 bis 6, **dadurch gekennzeichnet, dass** dem Okular des Instruments (40) ein endoskopisches Kameradummy (50) zugeordnet ist, das nach dem Pendelprinzip ausgeführt ist.

8. Virtueller OP-Simulator nach Anspruch 7, **dadurch gekennzeichnet, dass** das Kameradummy (50) Steuersignale erzeugt, die der Kontrollsteuereinheit (20) zugeführt werden und bestimmte Funktionen einer Kamera, insbesondere Fokus, Zoom, betreffen.

9. Virtueller OP-Simulator nach einem der vorhergehenden Ansprüche, **dadurch gekennzeichnet, dass** die erste Schnittstelle (24) mit einer Übertragungsrate von 16 bis 60 Hz arbeitet.

10. Virtueller OP-Simulator nach einem der vorhergehenden Ansprüche, **dadurch gekennzeichnet, dass** die zweite Schnittstelle (26) mit einer Übertragungsrate von etwa 500 bis 1000 Hz arbeitet.

11. Virtueller OP-Simulator nach einem der vorhergehenden Ansprüche, **dadurch gekennzeichnet, dass** die Kraftrtickkoppelungseinheit (60) mehrere Stellelemente aufweist, die der Instrumenteneingabeeinheit (30) zugeordnet sind und mit dem Instrument (40) zusammenwirken.

12. Virtueller OP-Simulator nach einem der vorhergehenden Ansprüche, **dadurch gekennzeichnet, dass** die Simulationsrechnereinheit (12) ein Personal Computer (13) ist.

13. Virtueller OP-Simulator nach Anspruch 12, **dadurch gekennzeichnet, dass** die Simulationsrechnereinheit (12) etwa 30 Sollkraftwerte pro Sekunde an die Kontrollsteuereinheit (20) sendet, und die Kontrollsteuereinheit (20) aus diesen etwa 30 Werten 1000 Werte berechnet und an die Instrumenteneingabeeinheit (30) sendet.

14. Virtueller OP-Simulator nach einem der vorhergehenden Ansprüche, **dadurch gekennzeichnet, dass** ein einziges Instrument (40) vorgesehen ist, und die Instrumenteneingabeeinheit (30) eine einzige Aufnahme für ein Instrument (40) aufweist.

15. Virtueller OP-Simulator nach einem der Ansprüche 1 bis 13, **dadurch gekennzeichnet, dass** zumindest zwei Instrumenteneingabeeinheiten (30) vorgesehen sind, die beabstandet zueinander angeordnet sind und jeweils ein Instrument (40) aufnehmen können.

16. Virtueller OP-Simulator nach Anspruch 15, **dadurch gekennzeichnet, dass** eine Abstandserfassungseinheit vorgesehen ist, die den Instrumenteneingabeeinheiten zugeordnet ist und deren Abstand zueinander erfasst und an die Simulationsrechnereinheit zur weiteren Verarbeitung übermittelt.

17. Virtueller OP-Simulator nach Anspruch 15 oder 16, **dadurch gekennzeichnet, dass** eine Haltevorrichtung für die Instrumenteneingabeeinheiten vorgesehen ist und dazu ausgebildet ist, eine Verlagerung zumindest einer Instrumenteneingabeeinheit relativ zu der anderen zu ermöglichen.

18. Virtueller OP-Simulator nach einem der vorhergehenden Ansprüche, **dadurch gekennzeichnet, dass** die Instrumenteneingabeeinheit (30) eine Instrumentenerkennungsvorrichtung aufweist.

## Claims

1. A virtual OP simulator (10) for training for minimal-invasive operations, in particular for endourological interventions, having
a simulation computer unit (12),
at least one instrument (40),
at least one instrument input unit (30) for picking up the instrument (40), with the instrument input unit (30) allowing and recording movement of the instrument (40) in a predetermined number of degrees of freedom, and
a force feedback unit (60) which is associated with the instrument input unit (30) and applies variable forces to the instrument (40) directly or indirectly via the instrument input unit (30),
**characterized in that**
a monitoring control unit (20) is provided, which is connected to the simulation computer unit (12) and to the instrument input unit (30), with the monitoring control unit (20) having a first interface (24) which provides communication of parameters between the monitoring control unit (20) and the simulation computer unit (12) at a transmission rate in the region of the video framing rate, and having a second interface (26) which provides communication of parameters with the instrument input unit (30) at a transmission rate which is higher than the video framing rate,
the instrument input unit (30) allows at least four degrees of freedom, detects movements of the instrument (40) within these degrees of freedom, supplies corresponding signals to the monitoring control unit (20) and receives signals for the force feedback unit (60), at least some of which are generated by the simulation computer unit (12), and the monitoring control unit (20) is designed to receive a number of force values per second for the force feedback unit (60) from the simulation computer unit (12), to calculate a multiple of this number of force values by interpolation, and to send them to the instrument input unit (30) for the force feedback unit (60).

2. The virtual OP simulator as claimed in claim 1, wherein the first interface (24) is a serial interface, in particular a USB interface.

3. The virtual OP simulator as claimed in claim 1 or 2, wherein the second interface (26) is a parallel interface (27).

4. The virtual OP simulator as claimed in one of the preceding claims, wherein the instrument (40) is related on the proximal side to a resectoscope (70) with optics, a resection loop and a rinsing shaft, and has an actuating element (86), in particular a microactuating element, which is associated with the force feedback unit (60) and injects a force into the axial loop movement, which force simulates distal-side tissue resistance to the loop.

5. The virtual OP simulator as claimed in claim 4, wherein valvecocks (94, 96) are provided on the rinsing shaft and are provided with sensors for recording of the valvecock movement, with the signals which are produced by the sensors being transmitted via the monitoring control unit (20) to the simulation computer unit (12).

6. The virtual OP simulator as claimed in one of claims 1 to 5, wherein electrical lines for transmission of electrical signals to and from the instrument (40) are passed via the normally provided optical connection (88).

7. The virtual OP simulator as claimed in one of claims 4 to 6, wherein the eyepiece of the instrument (40) has an associated endoscopic camera dummy (50) which is designed on the suspension principle.

8. The virtual OP simulator as claimed in claim 7, wherein the camera dummy (50) produces control signals which are supplied to the monitoring control unit (20) and relate to specific functions of a camera, in particular focus and zoom.

9. The virtual OP simulator as claimed in one of the preceding claims, wherein the first interface (24) operates at a transmission speed of 16 to 60 Hz.

10. The virtual OP simulator as claimed in one of the preceding claims, wherein the second interface (26) operates at a transmission rate of about 500 to 1000 Hz.

11. The virtual OP simulator as claimed in one of the preceding claims, wherein the force feedback unit (60) has a plurality of actuating elements which are associated with the instrument input unit (30) and interact with the instrument (40).

12. The virtual OP simulator as claimed in one of the preceding claims, wherein the simulation computer unit (12) is a personal computer (13).

13. The virtual OP simulator as claimed in claim 12, wherein the simulation computer unit (12) sends approximately 30 nominal force values per second to the monitoring control unit (20), and the monitoring control unit (20) uses these approximately 30 values to calculate 1000 values, and sends them to the instrument input unit (30).

14. The virtual OP simulator as claimed in one of the preceding claims, wherein a single instrument (40) is provided, and the instrument input unit (30) has a single holder for one instrument (40).

15. The virtual OP simulator as claimed in one of claims 1 to 13, wherein at least two instrument input units (30) are provided, which are arranged at a distance from one another and can each hold one instrument (40).

16. The virtual OP simulator as claimed in claim 15, wherein a distance recording unit is provided, which is associated with the instrument input units and records the distance between them, and transmits this to the simulation computer unit for further processing.

17. The virtual OP simulator as claimed in claim 15 or 16, wherein a holding apparatus is provided for the instrument input units and is designed to allow movement of at least one instrument input unit relative to the other.

18. The virtual OP simulator as claimed in one of the preceding claims, wherein the instrument input unit (30) has an instrument recognition apparatus.

## Revendications

1. Simulateur d'OP virtuel (10) pour la formation à des opérations très peu invasives, notamment pour des interventions endourologiques, comprenant une unité de calcul de simulation (12),
au moins un instrument (40),
au moins une unité d'entrée d'instrument (30) destinée à accueillir l'instrument (40), l'unité d'entrée d'instrument (30) permettant et détectant un mouvement de l'instrument (40) dans un nombre prédéfini de degrés de liberté, et
une unité à rétroaction de force (60) associée à l'unité d'entrée d'instrument (30), laquelle soumet l'instrument (40) à des forces réglables directement ou indirectement par le biais de l'unité d'entrée d'instrument (30),
**caractérisé en ce que**
il est prévu une unité de commande et de contrôle (20) qui est reliée avec l'unité de calcul de simulation (12) et l'unité d'entrée d'instrument (30), l'unité de commande et de contrôle (20) présentant une première interface (24) qui met à disposition une communication de paramètres entre l'unité de commande et de contrôle (20) et l'unité de calcul de simulation (12) avec une vitesse de transmission dans la plage de la fréquence des images vidéo, et une deuxième interface (26) qui met à disposition une communication de paramètres avec l'unité d'entrée d'instrument (30) avec une vitesse de transmission qui est supérieure à la fréquence des images vidéo,
l'unité d'entrée d'instrument (30) permet au moins quatre degrés de liberté, détecte des mouvements de l'instrument (40) à l'intérieur de ces degrés de liberté, délivre des
signaux correspondants à l'unité de commande et de contrôle (20) et reçoit des signaux pour l'unité à rétroaction de force (60), lesquels sont au moins partiellement générés par l'unité de calcul de simulation (12), et
l'unité de commande et de contrôle (20) est conçue pour recevoir de la part de l'unité de calcul de simulation (12) un certain nombre de valeurs de force par seconde pour l'unité à rétroaction de force (60) et calculer un multiple de ce nombre de valeurs de force par interpolation et l'envoyer à l'unité d'entrée d'instrument (30) pour l'unité à rétroaction de force (60).

2. Simulateur d'OP virtuel selon la revendication 1, **caractérisé en ce que** la première interface (24) est une interface série, notamment une interface USB (25).

3. Simulateur d'OP virtuel selon la revendication 1 ou 2, **caractérisé en ce que** la deuxième interface (26) est une interface parallèle (27).

4. Simulateur d'OP virtuel selon l'une des revendications précédentes, **caractérisé en ce que** l'instrument (40) s'inspire du côté proximal d'un résectoscope (70) avec optique, boucle de résection et tige de rinçage, et présente un élément de réglage (86), notamment un élément de microréglage qui est associé à l'unité à rétroaction de force (60) et qui injecte dans le mouvement de bouclage axial une force qui simule une résistance de tissu côté distal à la boucle.

5. Simulateur d'OP virtuel selon la revendication 4, **caractérisé en ce que** des robinets de vanne (94, 96) sont prévus sur la tige de rinçage, lesquels sont dotés de capteurs pour détecter le mouvement du robinet de vanne, les signaux générés par les capteurs étant transmis à l'unité de calcul de simulation (12) par le biais de l'unité de commande et de contrôle (20).

6. Simulateur d'OP virtuel selon l'une des revendications 1 à 5, **caractérisé en ce que** des lignes électriques destinées à transmettre des signaux électriques vers ou depuis l'instrument (40) passent par le branchement optique (88) habituellement prévu.

7. Simulateur d'OP virtuel selon l'une des revendications 4 à 6, **caractérisé en ce qu'**une caméra endoscopique factice (50), qui est réalisée selon le principe du pendule, est associée à l'oculaire de l'instrument (40).

8. Simulateur d'OP virtuel selon la revendication 7, **caractérisé en ce que** la caméra factice (50) génère des signaux de commande qui sont acheminés à l'unité de commande et de contrôle (20) et qui concernent certaines fonctions d'une caméra, notamment la mise au point et le grossissement.

9. Simulateur d'OP virtuel selon l'une des revendications précédentes, **caractérisé en ce que** la première interface (24) fonctionne avec une fréquence de transmission de 16 à 60 Hz.

10. Simulateur d'OP virtuel selon l'une des revendications précédentes, **caractérisé en ce que** la deuxième interface (26) fonctionne avec une fréquence de transmission d'environ 500 à 1000 Hz.

11. Simulateur d'OP virtuel selon l'une des revendications précédentes, **caractérisé en ce que** l'unité à rétroaction de force (60) présente plusieurs éléments de réglage qui sont associés à l'unité d'entrée d'instrument (30) et qui interagissent avec l'instrument (40).

12. Simulateur d'OP virtuel selon l'une des revendications précédentes, **caractérisé en ce que** l'unité de calcul de simulation (12) est un ordinateur personnel (13).

13. Simulateur d'OP virtuel selon la revendication 12, **caractérisé en ce que** l'unité de calcul de simulation (12) envoie environ 30 valeurs de force de consigne par seconde à l'unité de commande et de contrôle (20) et l'unité de commande et de contrôle (20) calcule 1000 valeurs à partir de ces environ 30 valeurs et les envoie à l'unité d'entrée d'instrument (30).

14. Simulateur d'OP virtuel selon l'une des revendications précédentes, **caractérisé en ce qu'**il est prévu un seul instrument (40) et l'unité d'entrée d'instrument (30) présente un unique logement pour un instrument (40).

15. Simulateur d'OP virtuel selon l'une des revendications 1 à 13, **caractérisé en ce qu'**au moins deux unités d'entrée d'instrument (30) sont prévues, lesquelles sont espacées l'une de l'autre et peuvent respectivement accueillir un instrument (40).

16. Simulateur d'OP virtuel selon la revendication 15, **caractérisé en ce qu'**il est prévu une unité de détection d'écart qui est associée aux unités d'entrée d'instrument et détecte leur espacement mutuel et le transmet à l'unité de calcul de simulation en vue d'un traitement supplémentaire.

17. Simulateur d'OP virtuel selon la revendication 15 ou 16, **caractérisé en ce qu'**il est prévu un dispositif de maintien pour les unités d'entrée d'instrument, lequel est configuré pour permettre un déplacement d'au moins une unité d'entrée d'instrument par rapport à l'autre.

18. Simulateur d'OP virtuel selon l'une des revendications précédentes, **caractérisé en ce que** l'unité d'entrée d'instrument (30) présente un dispositif de détection d'instrument.
